Europäisches Patentamt

European Patent Office

Office européen des brevets

(11) Veröffentlichungsnummer: **0 242 323**
**A1**

## (12) EUROPÄISCHE PATENTANMELDUNG

(21) Anmeldenummer: 87810154.2

(22) Anmeldetag: 17.03.87

(51) Int. Cl.⁴: **F 03 D 11/02**

(30) Priorität: 20.03.86 CH 1123/86

(43) Veröffentlichungstag der Anmeldung:
21.10.87 Patentblatt 87/43

(84) Benannte Vertragsstaaten:
AT BE CH DE ES FR GB GR IT LI LU NL SE

(71) Anmelder: **Hydro Mécanique Research S.A.**
**6, rue Heine**
**L-1011 Luxembourg (LU)**

(72) Erfinder: **Nijenhuis,Harry**
**Toldijk 29**
**NL-7901 TA Hoogeveen (NL)**

(74) Vertreter: **White, William et al**
**Isler AG Patentanwalts-Bureau Walchestrasse 23**
**CH-8006 Zürich (CH)**

(54) **Windmühle.**

(57) Auf einem Mast (1) ist eine Plattform (3) schwenkbar gelagert. Die Plattform (3) trägt die Lager (11,12) einer Rotorwelle (10). Der Rotor (4) hat mehrere Rotorflügel (5). Mit der Rotornabe (15) ist ein Zahnkranz bestehend aus einem Ring (20) mit drehbaren, achsparallelen Stiften (21) verbunden. Der Zahnkranz kämmt mit den Ritzeln (22) mehrerer Generatoren (6). Damit ist das Uebersetzungsgetriebe der Windmühle einfach aufgebaut und leicht zu warten. Durch die Wahl der Anzahl Generatoren kann die Windmühle mit geringem Aufwand an die örtlichen Windverhältnisse angepasst werden.

Fig. 3

EP 0 242 323 A1

Bundesdruckerei Berlin

## Beschreibung

## Windmühle

Aus der FR-PS 2'394'689 ist eine Windmühle mit einem Mast, einem an dessen oberem Ende drehbar gelagerten Rotor mit Rotorflügeln und mehreren mit dem Rotor über ein Untersetzungsgetriebe verbundenen Generatoren bekannt. Das Untersetzungsgetriebe besteht aus einem an den Flügelspitzen der Rotorflügel befestigten Zahnkranz und je einem damit kämmenden, auf der Generatorwelle sitzenden Ritzel. Die Generatoren sind unterhalb des Rotors auf einer Konsole montiert.

Um eine nennenswerte Ausgangsleistung abgeben zu können, muss der Rotor einen grossen Durchmesser aufweisen. Damit würde jedoch beim Vorschlag gemäss FR-PS 2'394'689 der Zahnkranz entsprechend gross. Der Zahnkranz wird bei diesem Vorschlag durch die auf ihn und die Rotorflügel wirkenden Windkräfte deformiert, so dass ein optimaler Zahneingriff nicht erreicht werden kann. Ausserdem sind sämtliche Ritzel auf einer Seite des Rotors angeordnet. Dies hat hohe Radialkräfte auf die Rotorlager zur Folge.

Der vorliegenden Erfindung liegt die Aufgabe zugrunde, eine leistungsfähige, wartungsfreundliche Windmühle zu schaffen, bei welcher der Zahneingriff des Untersetzungsgetriebes wenig von den Windkräften abhängt und die Radialkräfte der Rotorlagerung gering sind.

Diese Aufgabe wird dadurch gelöst, dass der Zahnkranz radial innerhalb der Rotorflügel angeordnet ist, und dass die Generatoren symmetrisch zur Drehachse des Rotors angeordnet sind. Vorzugsweise bestehen mindestens die Laufflächen der Generatorritzel aus Gummi mit einer Verstärkung aus Gewebe oder Metallgeflecht. Damit kann ein sehr geräuscharmer Lauf erzielt werden. Um den Windeinfluss auf den Zahneingriff ganz zu eliminieren, sind zweckmässig der Zahnkranz und die Rotorblätter je unabhängig voneinander direkt mit der Rotornabe verbunden. Eine Durchbiegung der Verbindungsstangen der Rotorblätter mit der Nabe hat dann keinen Einfluss auf den Zahnkranz. Der Zahnkranz kann aus einem Ring mit achsparallelen, um ihre Achsen drehbaren Stiften bestehen. Dadurch kann der Verschleiss auch ohne Schmierung gering gehalten werden.

Diese Getriebeausbildung ist zwar in einem andern Zusammenhang aus der DE-PS 807'576 bekannt.

Nachfolgend wird ein Ausführungsbeispiel der Erfindung anhand der Zeichnung erläutert. Darin zeigt:

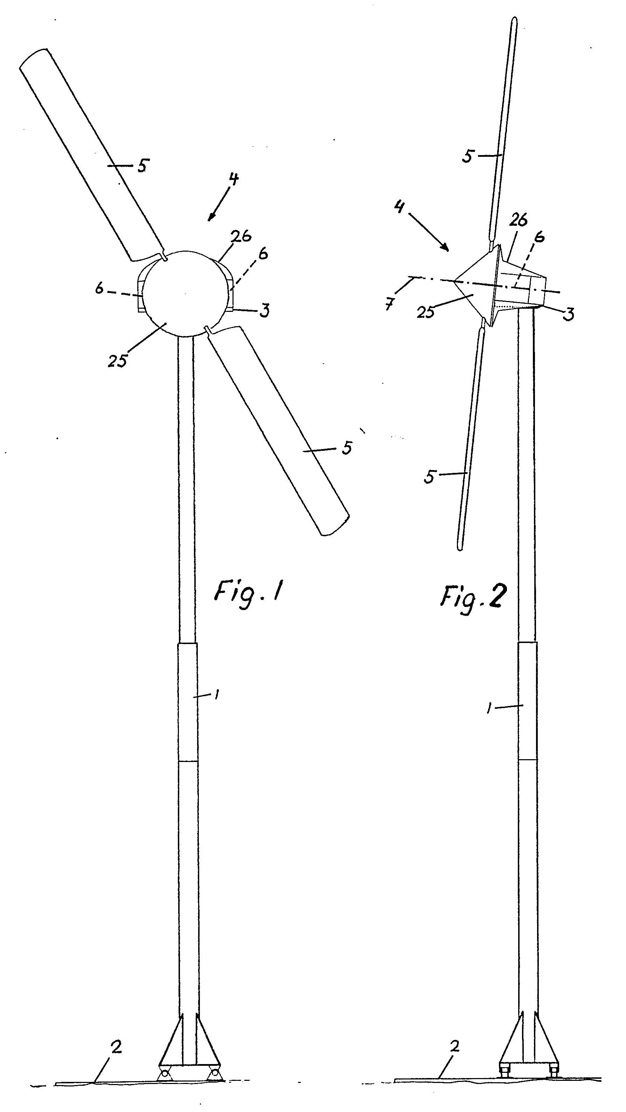

Fig. 1 und Fig. 2 eine Front- und Seitenansicht der Windmühle,
Fig. 3 eine perspektivische Ansicht des Generatorteils der Windmühle, und
Fig. 4 eine Stirnansicht eines Ritzels.

Auf einem am Boden 2 verankerten Mast 1 ist eine Plattform 3 um die Mastachse schwenkbar gelagert. Auf der Plattform 3 sind die Achslager eines Rotors 4 mit Rotorflügeln 5 sowie zwei Generatoren 6 befestigt. Durch Schwenken der Plattform 3 um die Mastachse lässt sich die leicht geneigte Rotorachse 7 in den Wind drehen.

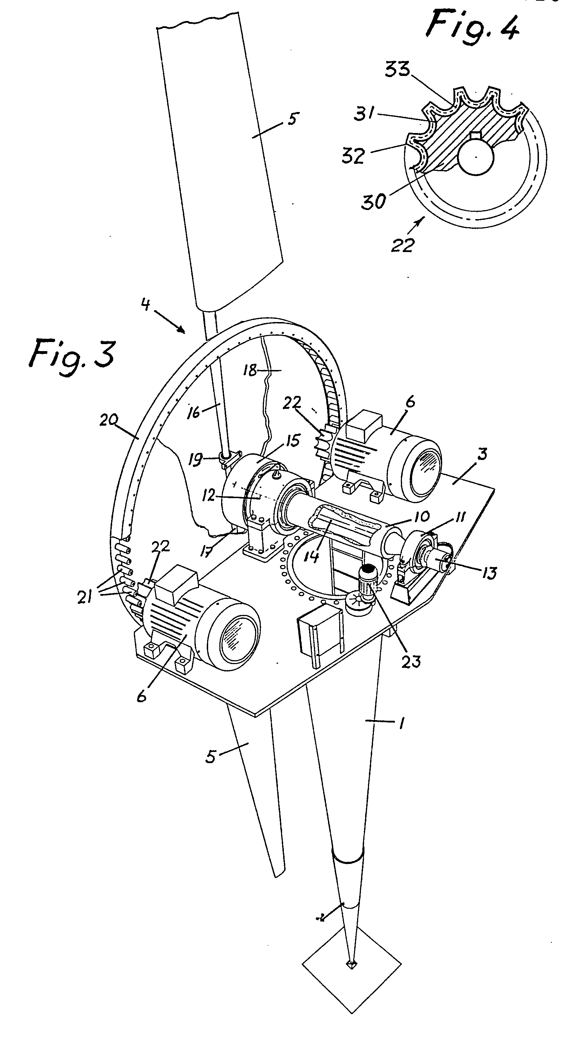

In Fig. 3 ist der Generatorteil der Plattform 3 vergrössert dargestellt. Die hohle Rotorwelle 10 ist in Lagern 11, 12 gelagert. Am Gehäuse des Lagers 11 ist ein Servoantrieb 13 zum Verstellen der Anstellwinkel der Rotorflügel 5 befestigt. Der Antrieb 13 wirkt über eine in der Welle 10 geführte Stange 14 auf einen in der Rotornabe 15 angeordneten Verstellmechanismus, der die beiden Schwenkachsen 16, 17 der Rotorflügel 5 gegensinnig verdreht. Die Rotornabe 15 trägt zwei Lager 19 für die Schwenkachsen 16, 17.

Eine an der Nabe 15 befestigte Scheibe 18 trägt aussen einen Ring 20 mit regelmässig voneinander beabstandeten, im Ring 20 drehbar gelagerten, achsparallelen Stiften 21. Der Ring 20 mit den Stiften 21 bildet einen Zahnkranz, der mit den Antriebsritzeln 22 der Generatoren 6 kämmt. In Fig. 3 ist noch ein Motor 23 zum Schwenken der Plattform 3 dargestellt. Am Ring 20 ist eine in Fig. 3 nicht dargestellte Haube 25 befestigt. Diese ist mit einer Labyrinthdichtung gegenüber einem auf der Plattform 3 befestigten Gehäuse 26 abgerichtet, so dass die beweglichen Teile der Windmühle vor Nässe geschützt sind.

Wie in Fig. 4 dargestellt, besteht das Ritzel 22 aus einem Kern 30 aus Stahl, auf dessen gezahnte Peripherie 31 ein die Lauffläche bildender Gummibelag 32 aufvulkanisiert oder aufgegossen ist. Der Gummi kann mit Gewebe 33 oder einem Metallgeflecht verstärkt sein. Durch diese Ausbildung wird ein geräuscharmer Lauf erreicht. Ausserdem braucht damit das Untersetzungsgetriebe nicht geschmiert zu werden.

Das sehr einfache Uebersetzungsgetriebe, bestehend aus dem Zahnkranz 20, 21 und den Ritzeln 22 ist leicht zu warten. Ausserdem ermöglicht es, wahlweise zwei oder mehr Generatoren über den Umfang des Rings 20 verteilt anzuordnen, so dass die Abtriebsleistung einfach an die am vorgesehenen Standort herrschenden Windverhältnisse angepasst werden kann. Mit derselben Grundkonstruktion kann daher unterschiedlichen Anforderungen Rechnung getragen werden, was die Herstellungs- und Lagerhaltungskosten senkt.

## Patentansprüche

1. Windmühle umfassend einen Mast (1), einen an dessen oberem Ende drehbar gelagerten Rotor (4) mit Rotorflügeln (5) und mehrere mit dem Rotor (4) über ein Uebersetzungsgetriebe (20,21,22) verbundenen Generatoren (6), wobei das Uebersetzungsgetriebe (20,21,22) aus einem mit dem Rotor (4) verbundenen Zahnkranz (20,21) und je einem damit kämmenden, auf der Generatorwelle sitzenden Ritzel (22) besteht, dadurch gekennzeichnet, dass der Zahnkranz (20,21) radial innerhalb der Rotorflügel (5) angeordnet ist, und dass die Generatoren (6) symmetrisch zur Drehachse des Rotors (4) angeordnet sind.

2. Windmühle nach Anspruch 1, dadurch gekennzeichnet, dass mindestens die Lauffläche des Ritzels (22) aus Gummi (32) besteht.

3. Windmühle nach Anspruch 2, dadurch gekennzeichnet, dass der Gummi gewebeverstärkt ist.

4. Windmühle nach Anspruch 2, dadurch gekennzeichnet, dass der Gummi durch ein Metallgeflecht verstärkt ist.

5. Windmühle nach einem der Ansprüche 1 bis 4, dadurch gekennzeichnet, dass die Rotorblätter (5) über Verbindungsstangen (16) mit einer Rotornabe (15) verbunden sind, und dass der Zahnkranz (20,21) über eine von den Stangen (16) unabhängige Verbindung (18) direkt an der Nabe (15) befestigt ist.

6. Windmühle nach einem der Ansprüche 1 bis 5, dadurch gekennzeichnet, dass der Zahnkranz (20,21) aus einem Ring (20) mit achsparallelen Stiften (21) gebildet ist.

7. Windmühle nach Anspruch 6, dadurch gekennzeichnet, dass die Stifte (21) im Ring (20) drehbar gelagert sind.

0242323

Fig. 1

Fig. 2

0242323

Fig. 4

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 840 394 (ROGGE) <br> * Seite 2, Zeile 21 - Seite 3, Zeile 2 * | 1,5 | F 03 D 11/02 |
| A | DE-C- 807 576 (EMDE) <br> * Seite 2, Zeilen 13-31 * | 2,6,7 | |
| A | DE-C- 872 140 (LÖWIS) <br> * Patentanspruch 1 * | 2 | |
| A | DE-A-2 901 816 (SANNECK) <br> * Anspruch 7 * | 3 | |
| A | US-A-3 733 921 (CARVETH) <br> * Spalte 1, Zeile 59 - Spalte 2, Zeile 31 * | 4 | RECHERCHIERTE SACHGEBIETE (Int. Cl.4) <br><br> F 03 D |

Der vorliegende Recherchenbericht wurde für alle Patentansprüche erstellt.

| Recherchenort | Abschlußdatum der Recherche | Prüfer |
|---|---|---|
| DEN HAAG | 09-07-1987 | DE WINTER P.E.F. |